# EUROPEAN PATENT SPECIFICATION

(11) **EP 0 850 700 B1**
(45) Date of publication and mention of the grant of the patent: **29.01.2003**
(21) Application number: 97203735.2
(22) Date of filing: 28.11.1997
(51) Int. Cl.: B09B 3/00

(54) **Process for recycling, by milling, solid industrial waste and materials at the end of their service life**
Verfahren zur Wiederverwertung, durch Mahlen, von festem industriellen Abfall und Materialien am Ende ihrer Lebensdauer
Procédé pour le recyclage, par broyage, des déchets industriels solides et des matières à la fin de leur durée de vie

(30) Priority: 02.12.1996 IT FI960280
(43) Date of publication of application: 01.07.1998
(73) Proprietor: Consorzio Interuniversitario per lo Sviluppo dei Sistemi a Grande Interfase, C S G I, 50121 Firenze (IT); M.B.N. Srl, 31020 S. Vendemiano (Treviso) (IT)
(72) Inventor: Matteazzi, Paolo, 31100 Treviso (IT); Baglioni, Piero, 50010 Caldine, (Firenze) (IT); Basset, Diego, 31020 S. Vendemiano, (Treviso) (IT)
(74) Representative: Dragotti, Gianfranco

(56) References cited:
- EP-A- 0 589 321
- EP-A- 0 661 145
- DE-A- 3 216 859
- US-A- 4 772 430

## Description

The present invention relates to a process for the preparation of composite powders and more specifically to a process which makes use of the high-energy ball milling of solid components and of polymers in a mill of the type described in European Patent No. 665.770, thus producing an intimate mixture of components which can either undergo subsequent compaction and forming operations or can be used as raw material for the production of other materials.

In particular, the process is mainly directed at the recycling of solid industrial waste and materials at the end of their service life by incorporating them in plastics matrices constituted by polymers.

At present, plastic materials are recycled using various techniques (summarised, for example, in "Kirk-Othmer, Encyclopedia of Chemical Technology", 3rd edition, vol. 19, pages 993-1002). However, all the known techniques have various difficulties associated with the need to classify the type of plastic material. In addition, thermosetting polymers are not recyclable, except to a minimum extent (whereas individual thermoplastics can be recycled to a greater extent).

Furthermore, some types of industrial waste or materials at the end of their service life include polymers which are more or less intimately associated with other materials, for example: a) metals and alloys present in electrical cables, in products for electromagnetic shielding and in various mechanical components; b) natural fibres and polymer fibres in manufacturing waste from the textile industry; c) combinations of various polymers in a very large number of applications (for example, PET bottles with polyethylene caps, etc.); d) inorganic compounds incorporated in plastics matrices for inert, structural or magnetic functions, etc.; e) abrasive grinding wheel components with combinations of polymers, inorganic compounds and hard ceramics.

Milling techniques - which also are abundantly described in "Kirk-Othmer, Encyclopedia of Chemical Technology", 3rd edition, vol. 21, pages 132-161 - can be used with the purpose of obtaining a size reduction or comminution of plastic or plastic-based waste materials. In particular, EP-A-589 321 discloses a machinery in which a roller, by revolving at high speed close to a narrowing concave stationary surface, has a shearing effect on the materials to be recycled since they are reduced into very small pieces of a dimension not lower than 0,025 mm (i. e. 25 micron). Process duration is not included among the process parameters mentioned in this prior document and no reference can there be found about a possible modification of the structural/physical properties in said small pieces.

As is known, beyond those mentioned in connection with plastics materials, there are no industrial-scale recycling processes for any of the materials mentioned, these processes having hitherto encountered an often insurmountable obstacle in the separation of the individual component materials (for example copper from electric cables). In any case, present recycling techniques are complex and involve a substantial environmental impact, which is not compatible with a recycling activity. DE-A-32 16 859, EP-A-661 145 and US-A-4 772 430 can be cited in this connection as additional literature of the state of art.

The aim of the present invention is to obtain composite powders by using a known technique such as ball-milling in order to go beyond a mere reduction in size and consequently have the possibility of recycling a wide range of solid materials either used in or resulting from waste of industrial operations without the necessity of using any separation stage or technique (except for some simple washing stages).

According to the invention, the process consists in the prolonged processing of heterogeneous materials (especially solid industrial waste and/or materials at the end of their service life) by high-energy ball milling, until a high degree of interpenetration of the basic constituents (polymers, metals, inorganic substances, etc.) is obtained at the atomic or molecular or chain level.

For the implementation of the process, oscillating ball mills as described in European Patent No. 665.770 can be used.

A first advantage of the invention lies in the fact that the intimate mixing obtained enables to overcome the majority of compatibility problems between heterogeneous materials.

The intimate mixing and interpenetration allows the millled powders to be further processed, especially the powders constituted of a substantial fraction of polymeric materials, which may constitute the binding phase of a solid obtainable by well known compacting and forming processes (for example extrusion, rolling), or as raw materials for the manufacture of other materials.

According to the invention the process is advantageously used to recycle various types of solid industrial waste, including by way of example:

Recycling of polymer mixtures: Mixtures of PET/PVC thermoplastic polymers for beverage bottles were obtained, in powder form, by high-energy milling (in a mill as described in European patent No. 665.770) and at temperatures close to the glass transition temperature and with a degree of interpenetration between one another which makes them no longer thermally incompatible for consolidation processes. "Compatible" mixtures were as well produced for polymers forming processes, such as polyamide/polyethylene. The powders so obtained, during the forming operations (which can be carried out even at temperatures lower than the usual temperatures) have made it possible to obtain polymer solids without phase separation between the polymers and with improved mechanical properties. Mixtures of thermoplastic and thermosetting polymers can also be obtained in the form of powders and as mixtures in which the components are highly interconnected and can be subjected to forming operations (for example moulding). All the powders obtained can also constitute fillers (either inert or not) for forming operations or moulding components made of other polymers.

Recycling of textile industry waste: During various manufacturing stages in the textile industry, small fibres (of the order of mm) are produced which cannot be used in yarns and which are at present disposed in dump. These fibres are constituted mainly of wool and acrylic fibres, with some polyester and polyamide fibres. Treatment in a high-energy mill for a time long enough, approximately one hour and at temperatures below the glass transition temperature of the components, results in an intimate mixing of the components at which a polymer or mixture of (for example PET/PVC) or the like may be added to increase the proportion of mouldable plastics matrix. The powders obtained can thus either be formed directly (extrusion, moulding) or be used as additives. Wool fibres, especially, can give a positive contribute to the mechanical strength of materials obtainable and to their thermal properties.

Recycling of cemented carbides tips. Cemented carbides tips are constituted by tungsten carbide and cobalt (from 1 to 20%). Currently there are no industrially viable recycling techniques available. Used tips were subjected to high-energy milling for about 4 hours. Powders were obtained with particle sizes of approximately 10 microns and crystal sizes of approximately 20 nm. The powders were sintered using a hot isostatic press, obtaining mechanical properties of hardness and toughness even improved respect to the starting materials. The powders were also used as raw material (replacing W, C and Co) for the synthesis of tool steel by means of the high-energy milling process.

Using the process according to the present invention, in addition to the examples already described, it is possible to recycle the following materials: electric cables, by producing polymer matrices with finely dispersed metallic and conductive particles, for possible uses, for example, in high-frequency shielding and in cases where it is necessary to increase the electrical conductivity in a polymer matrix; tyres with a metal carcass, by producing elastomeric matrices with fine dispersion of the metal particles constituting the steel of the carcass, followed by forming by means of a mechanical and vulcanisation process (pressing, extrusion, moulding); ski boots including the metal parts, producing mixed powders of polymer and metal which can be used as reinforced polymers (owing to the presence of the metal particles) in various applications; various sporting equipment (skis, snow shoes, etc.), by producing composite powders for use directly or as fillers; small electrical household appliances previously milled and selected, to give a predominantly thermoplastic matrix which can be used in mechanical forming processes.

## Claims

1. Process for recycling solid heterogeneous materials deriving from industrial waste and/or from products at the end of their service life comprising a step in which, without sorting of the said starting materials, the same are subjected to ball-milling, **characterized in that** the ball-milling is a high-energy action which is long enough to obtain a substantial interpenetration of the basic constituents of the starting materials at the atomic or molecular or chain level.

2. Process according to Claim 1, **characterized by** a subsequent step consisting in a mechanical forming process, known per se, such as extrusion and injection or compression moulding, to obtain either different products or products of the same type from which the starting materials are obtained are manufactured, where the materials with a substantial interpenetration of the basic constituents are used.

3. Use of the process according to Claim 1 or 2 to starting materials which are are at least partially constituted by polymers.

4. Use of the process according to any of the preceding Claims to starting materials which also comprise natural and/or polymer fibres.

5. Use of the process according to any of the preceding Claims to starting materials which also comprise metals and/or inorganic compounds embedded or incorporated into a polymer mass.

6. Process according to any of Claims 3 to 5, **characterized in that** the said high-energy ball milling step takes place at a temperature lower than the glass temperature of at least one of the polymers constituting the starting materials.

7. Use of the process according to any of the preceding Claims to starting materials which also comprise cemented carbides taken from used tools or parts thereof in which the high-energy ball-milling action takes place for a time long enough until powders having a particle size of less than 100 microns and/or having typical grain sizes of less than 0.1 micron are obtained.

## Patentansprüche

1. Verfahren zum Wiederaufbereiten von festen heterogenen Materialien, die von Industrieabfall und/oder von Produkten am Ende ihrer Lebensdauer herrühren, mit einem Schritt, bei dem ohne Sortieren dieser Startmaterialien diese einem Kugelmahlen unterworfen werden,
**dadurch gekennzeichnet, daß** das Kugelmahlen eine Hochenergietätigkeit ist, die lange genug ist zum Erzielen einer gegenseitigen Durchdringung der Basisbestandteile der Startmaterialien auf dem Atom-, Molekül- oder Kettenniveau.

2. Verfahren nach Anspruch 1,
**gekennzeichnet durch** einen letzten folgenden Schritt, der in einem mechanischen Formungsvorgang besteht, der für sich bekannt ist, wie Strangpressen und Injektion oder Pressen zum Erhalten entweder verschiedener Produkte oder Produkte der gleichen Art, von denen die Startmaterialien erhalten werden oder hergestellt werden, wobei die Materialien mit einer wesentlichen gegenseitigen Durchdringung auf der Basisbestandteile benutzt werden.

3. Verwenden des Verfahrens nach Anspruch 1 oder 2, für Startmaterialien, die mindestens teilweise durch Polymere dargestellt werden.

4. Verwendung des Verfahrens nach einem der vorhergehenden Ansprüche für Startmaterialien, die auch natürliche Fasern und/oder Polymerfasern aufweisen.

5. Verwenden des Verfahrens nach einem der vorhergehenden Ansprüche für Startmaterialien, die auch Metalle und/oder anorganische Verbindungen aufweisen, die in einer Polymermasse eingebettet oder enthalten sind.

6. Verfahren nach einem der Ansprüche 3 bis 5,
**dadurch gekennzeichnet, daß** der Hochenergie-Kugelmahlschritt bei einer Temperatur niedriger als die Glastemperatur von mindestens einem der Polymere stattfindet, die die Startmaterialien darstellen.

7. Verwenden des Verfahrens nach einem der vorhergehenden Ansprüche für Startmaterialien, die auch Sinterkarbide enthalten, die von benutzten Werkzeugen oder Teilen davon genommen werden, wobei die Hochenergie-Kugelmahltätigkeit während einer Zeit lang genug stattfindet, bis Pulver mit einer Teilchengröße von weniger als 100µm und/oder mit einer typischen Korngröße von weniger als 0,1µm erhalten werden.

## Revendications

1. Procédé de recyclage de matériaux hétérogènes solides provenant de déchets industriels et/ou de produits en fin de durée de vie comportant l'étape dans laquelle, sans trier lesdits matériaux de départ, ceux-ci sont soumis à un broyage à boulet, **caractérisé par le fait que** le broyage à boulet est un traitement à haute énergie assez long pour obtenir une interpénétration substantielle des constituants de base des matériaux de départ au niveau atomique, moléculaire ou châine.

2. Procédé selon la revendication 1, **caractérisé par** une étape finale subséquente consistant en un processus de formation mécanique, connu en soi, tel que le moulage par extrusion ou injection ou compression pour obtenir soit des produits différents, soit des produits de même type, à partir desquels on obtient les matériaux de départ qui sont manufacturés, où les matériaux ayant une interpénétration substantielle des composants de base sont utilisés.

3. Application du procédé selon les revendications 1 et 2 aux matériaux de départ qui sont au moins en partie constitués par des polymères.

4. Application du procédé selon l'une quelconque des revendications précédentes aux matériaux de départ qui comprennent des fibres naturelles ou polymères.

5. Application du procédé selon l'une quelconque des revendications précédentes aux matériaux de départ qui comprennent des composés métalliques ou minéraux noyés ou incorporés dans la masse de polymère.

6. Procédé selon l'une quelconque des revendications 3 à 5, **caractérisé par le fait que** ladite étape de broyage à boulet à haute énergie s'effectue à une température inférieure à la température de transition vitreuse de l'un au moins des polymères constituant les matériaux de départ.

7. Application du procédé selon l'une quelconque des rev endications précédentes aux matériaux de départ qui comportent aussi des carbures prélevés sur des outils usagés ou des parties de ceux -ci, dans laquelle le broyage à boulet à haute énergie s'éffectue pendant un temps assez long jusqu'à ce qu'une poudre avec une dimension granulométrique inférieure à 100 µm et/ou une dimension granulométrique typique inférieure à 0,1 µm soit obtenue.
